# EUROPEAN PATENT APPLICATION

(11) **EP 2 009 584 A1**
(43) Date of publication of application: **31.12.2008**
(21) Application number: 08011609.8
(22) Date of filing: 26.06.2008
(51) Int. Cl.: G06K 19/077

(54) **Tape tape, RFID label, tag tape roll, and RFID circuit element cartridge**

(30) Priority: 28.06.2007 JP 2007170202
(71) Applicant: Brother Kogyo Kabushiki Kaisha, Nagoya-shi, Aichi-ken 467-8561 (JP)
(72) Inventor: Yamaguchi, Koshiro, Nagoya-shi Aichi 4678561 (JP); Ichikawa, Yasuhisa, Nagoya-shi Aichi 4678561 (JP)
(74) Representative: Hofer, Dorothea

(57) **Abstract**

A tag tape (37) comprises an RFID tag insertion body (TI) which includes at least a substantially sheet-shaped antenna base (63) wherein an RFID circuit element (60) comprising an IC circuit part (80) for storing information and a tag antenna (62) for transmitting and receiving information is disposed, and a first tape (151) and a second tape (152) provided opposite each other so as to dispose a plurality of the RFID tag insertion bodies (TI) therebetween in the tape thickness direction, wherein the RFID tag insertion body (TI) is separably adhered to at least the first tape (151) or the second tape (152), between the first tape (151) and the second tape (152).

## Description

### TECHNICAL FIELD

The present invention relates to a tag tape comprising an RFID circuit element for storing information, an RFID label that uses this tag tape, a tag tape roll around which the tag tape is wound into a roll shape, and an RFID circuit element cartridge comprising the tag tape roll.

### BACKGROUND ART

An RFID (Radio Frequency Identification) system for transmitting and receiving information in a non-contact manner (coil based electromagnetic coupling type, electromagnetic induction type, or radio wave type, etc.) to and from an RFID circuit element for storing information is known.

For example, the system described in JP, A, 2005-322010 is known as one such system for transmitting and receiving information to and from an RFID circuit element and produce RFID labels. In this prior art, a tag tape (base tape) wherein an RFID circuit element is disposed at substantially equal intervals in the tape longitudinal direction is wrapped around into a roll shape so as to form a tag tape roll (a first roll). Additionally, an intermediate tape to be bonded to this tag tape is also wrapped around into a roll shape so as to form an intermediate tape roll (a third roll). Then, the tag tape and intermediate tape are fed out from the tag tape roll and intermediate roll, and the RFID circuit element is inserted between the fed out tag tape and intermediate tape (a tag encapsulated tape body). Subsequently, a print-receiving tape (cover film) on which desired print has been printed is attached to this tape body so as to form a tag label tape with print wherein an RFID circuit element is disposed within its laminated structure. RFID tag information is then transmitted and received to and from the RFID circuit element provided to the tag label tape with print, and the tag label tape with print is subsequently cut at a desired length so as to form an RFID label with print.

### DISCLOSURE OF THE INVENTION

### Problem to be Solved by the Invention

In the above prior art, the RFID circuit element is inserted in a laminated structure comprising a plurality of tapes so as to produce an RFID label. This RFID label is discarded as waste after it has served a predetermined use (or after its service life has elapsed). At the time of discard, the RFID circuit element is treated as industrial waste since it includes metal components, such as the IC circuit part and antenna. On the other hand, the other tape sections within the laminated structure are materials that can be discarded as regular garbage under normal circumstances since they are made of materials such as PET (polyethylene terephthalate), resin, and paper, for example. Nevertheless, in the above prior art, it is very difficult to pull the RFID circuit element apart from the other tape sections and discard the RFID circuit element separately after it has been bonded and formed into an RFID label. The absurdity thus exists that, despite the fact that the major portion of the product is made of a material that can be discarded as regular garbage, the user is forced to discard the entire RFID label as industrial waste.

It is therefore an object of the present invention to provide a tag tape that can be appropriately discarded by separation after use as an RFID label, an RFID label that uses this tag tape, a tag tape roll, and an RFID circuit element cartridge.

An invention for achieving the above object is a tag tape comprising an RFID tag insertion body which includes at least a substantially sheet-shaped antenna base characterized in that an RFID circuit element comprising an IC circuit part for storing information and a tag antenna for transmitting and receiving information is disposed, and a first tape and a second tape provided opposite each other so as to dispose a plurality of the RFID tag insertion bodies therebetween in the tape thickness direction, wherein the RFID tag insertion body is separably adhered to at least the first tape or the second tape, between the first tape and the second tape.

In this invention, the RFID tag insertion body disposed between the first tape and the second tape is separably adhered to at least the first tape or the second tape.

With a structure having the RFID tag insertion body adhered to the first tape (or the second tape), the RFID tag insertion body can be positioned and fixed (reliably without shifting) to the first tape (or the second tape) using the adhesive strength thereof in the process in which the RFID tag insertion body is inserted between the first tape and the second tape during manufacturing. Further, the RFID tag insertion body is reseparably adhered, thereby making it possible to separate the RFID tag insertion body from the first tape (or the second tape) to which it is adhered at the time usage has ended and the tag tape (RFID label produced using the tag tape) is to be discarded. As a result, the RFID tag insertion body can be separated from the first tape (or the second tape), making it possible to separate and appropriately discard the materials as separate types of waste. In particular, the first tape (or the second tape) is separated from the RFID tag insertion body side, making it possible to discard the first tape (or the second tape) as regular garbage rather than industrial waste.

### BRIEF DESCRIPTION OF THE DRAWING

FIG 1 is a diagram showing the configuration of an RFID label system to which a tag label producing apparatus according to the first embodiment of the present invention is applied.
FIG. 2 is a diagram showing the outer appearance and configuration of the tag label producing apparatus.
FIG. 3 is a diagram schematically showing the configuration of the main parts of the internal module.
FIG 4A is a top view illustrating an example of the configuration of a tag tape in the tape longitudinal and tape width directions, FIG. 4B is a bottom view thereof, and FIG. 4C is a diagram illustrating the configuration of the tag tape in the tape thickness direction as viewed from the side surface side.
FIG 5 is a functional block diagram that shows a functional configuration example of an RFID circuit element provided to the RFID tag insertion body.
FIG 6A is a top view illustrating an example of a configuration of an RFID label produced from the tag tape, and FIG 6B is a side view from the side surface side.
FIG 7 is a diagram schematically illustrating the cross-sectional structure of the cross-section B-B in FIG 6B.
FIG 8 is a schematic diagram showing in detail the cross-sectional structure of FIG. 7.
FIG. 9 is a perspective top view of the structure shown in FIG. 8, from direction C in the figure.
FIG. 10 is a schematic cross-sectional view illustrating the state after cutting based on the cutting line CT.
FIG. 11 is a schematic cross-sectional diagram for explaining the conditions of separation and discard processing.
FIG. 12 is a schematic cross-sectional diagram for explaining the conditions of separation and discard processing.
FIG 13 is a schematic diagram illustrating the cross-sectional structure of an RFID label according to various modifications and corresponds to FIG. 7.
FIG 14 is a schematic diagram illustrating the cross-sectional structure of an RFID label according to various modifications and corresponds to FIG 7.
FIG. 15 is a schematic diagram illustrating the cross-sectional structure of an RFID label according to various modifications.
FIG 16 is a schematic diagram illustrating the cross-sectional structure of an RFID label according to various modifications, and corresponds to FIG 7.
FIG. 17 is a perspective top view of the structure of the RFID label as viewed from above.
FIG 18 is a schematic diagram illustrating the cross-sectional structure of an RFID label according to various modifications.
FIG 19 is a diagram schematically showing the configuration of the main parts of the internal module in a modification wherein thermal paper is used, and corresponds to FIG 3.
FIG 20A is a top view illustrating an example of a configuration of the tag tape in the tape longitudinal and tape width directions, FIG 20B is a bottom view thereof, and FIG 20C is a diagram illustrating a configuration of the tag tape in the tape thickness direction as viewed from the side surface side. These figures respectively correspond to FIG 4A, FIG 4B, and FIG 4C.
FIG 21 is a schematic diagram illustrating the cross-sectional structure of an RFID label according to various modifications, and corresponds to FIG 7.
FIG 22 is a schematic diagram illustrating the cross-sectional structure of an RFID label according to various modifications.
FIG 23 is a schematic diagram illustrating the cross-sectional structure of an RFID label according to various modifications, and corresponds to FIG 21.
FIG 24 is a schematic diagram illustrating the cross-sectional structure of an RFID label according to various modifications.

### BEST MODE FOR CARRYING OUT THE INVENTION

The following describes an embodiment of the present invention with reference to accompanying drawings.

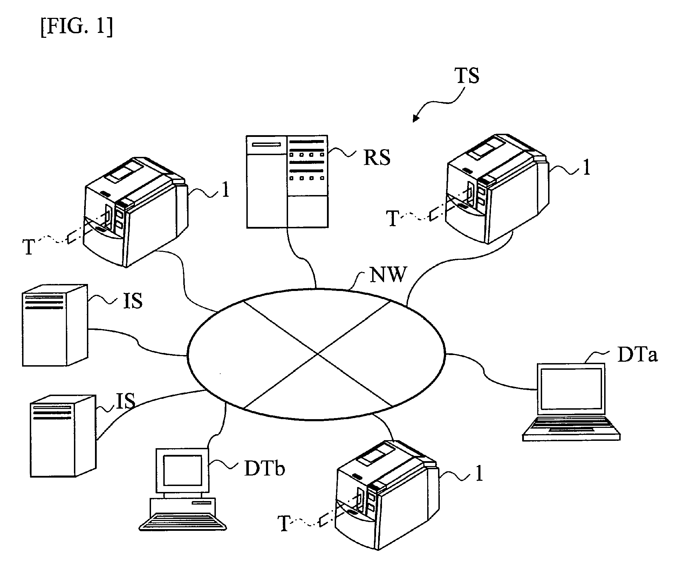

In an RFID label system TS shown in FIG 1, a tag label producing apparatus 1 in the first embodiment, comprises a route server RS, an information server IS, a terminal apparatus DTa, a general-purpose computer DTb, etc., via a communication network NW comprising a suitable communication line, etc.

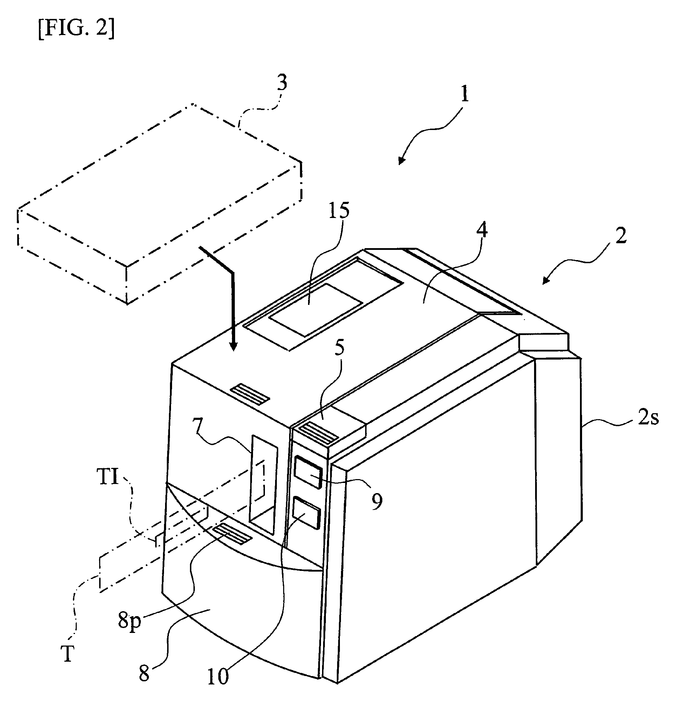

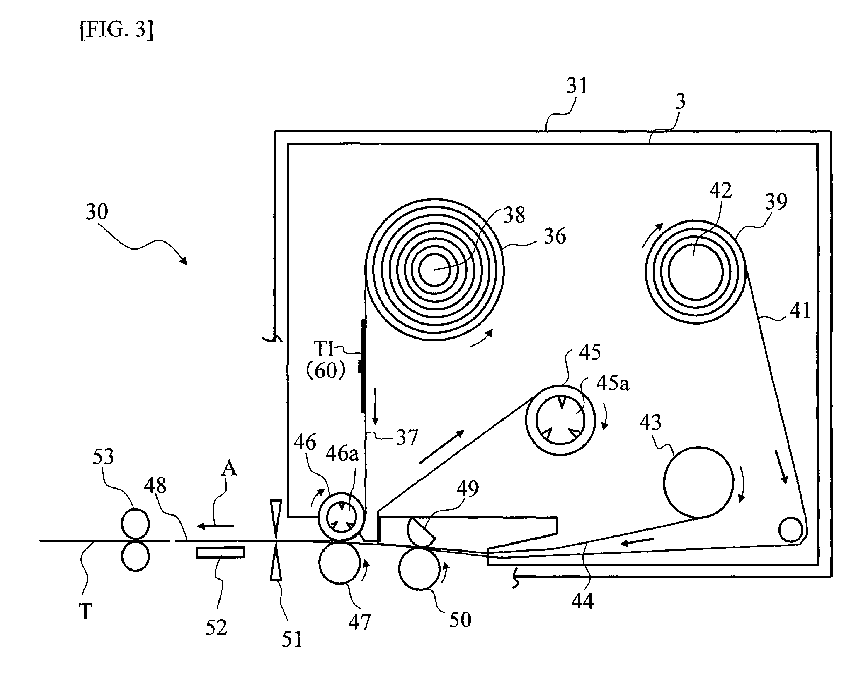

The tag label producing apparatus 1, as shown in FIG 2, comprises an apparatus main body 2, and a cartridge 3 mounted to a cartridge holder part 31 (refer to FIG. 3 described later) of the apparatus main body 2.

The apparatus main body 2 comprises a housing 2s of an overall rectangular shape as an outer shell (comprising an upper surface part, a lower surface part, a front surface part, a rear surface part, and both left and right side surface parts). On the upper surface part are provided an upper lid 4 and an upper lid operation button 5. On the front surface part are provided a label discharging exit 7, a front lid 8, a power button 9, and a cutter driving button 10.

The upper lid 4 is rotatably supported at the end part of the right back side in FIG 2 of the apparatus main body 2, is biased in the opening direction by a biasing member (not shown), and is lockable with the apparatus main body 2. When the cartridge 3 is removed or installed, the lid operation button 5 is pressed, thereby releasing the lock and opening the upper lid 4 via the biasing action of the biasing member, enabling cartridge 3 removal or installation in that state. Furthermore, on the upper lid 4 is provided an inspection window 15 fit with a transparent cover, etc.

The label discharging exit 7 discharges to the outside an RFID label T formed in the interior of the apparatus main body 2. The front lid 8 can be opened and closed when rotated using the lower end as the fulcrum point, and rotates forward and opens when a pressing part 8p provided on the upper end part is pressed upward. The power button 9 is used to turn on and off the main power source of the tag label producing apparatus 1. The cutter driving button 10 is used by the operator to manually operate a cutter 51 described later (refer to FIG. 3) and set the RFID label T to a desired length.

As shown in FIG. 3, an internal module 30 is provided to the interior of the apparatus main body 2. The internal module 30 comprises the cartridge holder 31, and is designed so that the cartridge 3 of FIG 2 is loaded to the cartridge holder 31. The internal module 30 comprises a feeding roller 46, a pressure roller 47, a print head 49, the cutter 51, an antenna 52, and a discharging roller 53.

The cartridge 3 comprises a tag tape roll 36 (actually spiral in shape, but simply shown in a concentric shape in the figure); and a cover film roll 39 (actually spiral in shape, but simply shown in a concentric shape in the figure).

The tag tape roll 36 is formed by a tag tape 37, which is a tag medium, wrapped around a tag tape reel part 38 so as to form a roll. The cover film roll 39 is formed by a transparent cover film 41 of a PET (polyethylene terephthalate) resin, for example, wrapped around a cover film reel part 42 so as to form a roll. Additionally, on the cartridge 3 are provided an ink ribbon roll 43 and a ribbon take-up roller 45 (driven by a ribbon take-up roller driving shaft 45a and) around which an ink ribbon 44 that is fed out from the ink ribbon roll 43 is wound. The ribbon take-up roller driving shaft 45a is driven and controlled by a feeding roller driving circuit (not shown).

A part of the cartridge 3 is visible from the outside through the above-described inspection window 15, when loaded to the cartridge holder 31.

The feeding roller 46 and the pressure roller 47 are rotationally driven as the feeding roller 46 is driven by a feeding roller driving shaft 46a. The feeding roller driving shaft 46a is driven and controlled by a feeding roller driving circuit (not shown).

The tag tape 37 fed out from the tag tape roll 36 and the cover film 41 fed out from the cover film roll 39 are pressed together and bonded in a layered state between the feeding roller 46 and the pressure roller 47. Further, the feeding roller 46 and the pressure roller 47 fulfill the above bonding function as well as the function of transporting and feeding in direction A a tag label tape 48 with print, which is a tag medium formed by the bonding of the tag tape 37 and the cover film 41.

The print head 49 is, for example, a thermal head comprising a plurality of heating elements. A platen roller 50 is provided in a position opposite the print head 49. The cover film 41 fed out from the cover film roll 39 passes between the print head 49 and the platen roller 50, where the heating elements are driven by a print-head driving circuit (not shown), thereby printing print on the printing surface (the upper side surface in FIG. 3, which is the back surface side, in this example) of the cover film 41.

The cutter 51 is connected to a solenoid (not shown), and this solenoid is excited by a solenoid driving circuit (not shown), thereby cutting the tag label tape 48 with print at a predetermined length so as to form the RFID label T.

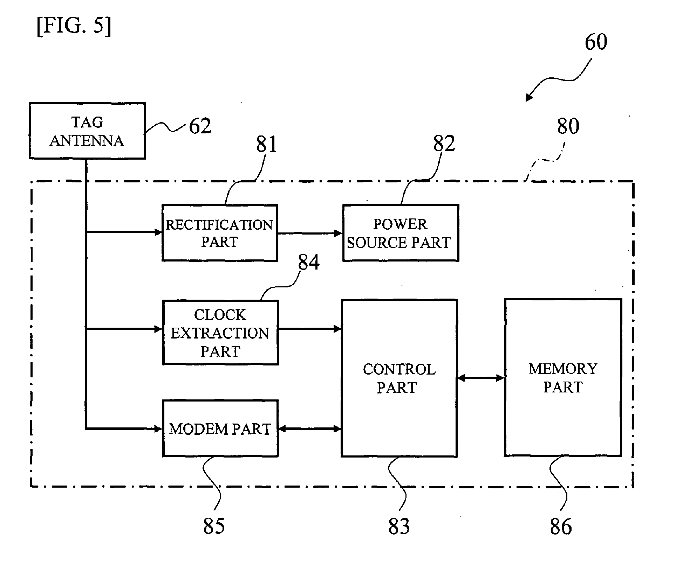

The antenna 52 performs communication for reading/writing information to/from an RFID circuit element 60 (refer to FIG 5 described later) within an RFID tag insertion body TI disposed in the tag tape 37 (the tag label tape 48 with print after bonding; the same hereafter).

The discharging roller 53 is rotationally driven by a discharging roller driving shaft (not shown). The discharging roller driving shaft is driven and controlled by a discharging roller driving circuit (not shown; or commonly with the above feeding roller driving circuit).

With the above configuration, during tag label production, for example, information corresponding to data arbitrarily entered by the operator using the terminal apparatus DTa is stored in (or read from) the RFID circuit element 60 of the RFID tag insertion body TI provided to the tag label tape 48 with print so as to form a printed RFID label T with print. That is, when the feeding roller 46 is driven, the tag tape 37 is fed out from the tag tape roll 36 and, in synchronization with the feed-out of the tag tape 37; the cover film 41 is also fed out from the cover film roll 39. With this arrangement, the tag label tape 48 with print is formed by the feeding roller 46 and the pressure roller 47, and subsequently transported in the direction of arrow A by the feeding roller 46.

Next, printing is performed on the cover film 41 fed out from the cover film roll 39 by the print head 49 (before the cover film 41 is bonded to the tag tape 37 by the feeding roller 46 and the pressure roller 47). That is, the ribbon take-up roller 45 is driven so as to feed the ink ribbon 44 out from the ink ribbon roll 43, and the print head 49 is driven so as to print the print characters R based on the data entered using the terminal apparatus DTa, for example. The printed cover film 41 is bonded to the tag tape 37 by the feeding roller 46 and the pressure roller 47.

The tag label tape 48 with print wherein the tag tape 37 and the cover film 41 are bonded to each other is fed out in the direction of arrow A by the feeding roller 46, arriving at a position near (opposite) the antenna 52. Then, when the RFID circuit element 60 of the RFID tag insertion body TI of the tag label tape 48 with print reaches a feeding position substantially opposite the antenna 52 (or a nearby position so as to enter the communication range), the feeding of the tag label tape 48 with print is stopped. Communication for information reading/writing such as described above (information transmission/reception) is then performed via the antenna 52. When information writing is performed, corresponding information is written based on the data entered using the terminal apparatus DTa of FIG. 1, for example, and when information reading is performed, the read information is displayed on the terminal apparatus DTa, for example.

When information reading/writing by the antenna 52 ends and the RFID tag insertion body TI comprising the RFID circuit element 60 advances a predetermined distance, the transport of the tag label tape 48 with print is stopped. Additionally, the cutter 51 is activated so as to cut the tag label tape 48 with print, thereby forming an RFID label T of a predetermined length.

Once the RFID label T of a predetermined length is formed by the cutting process, the RFID label T is fed to the outside by the discharging roller 53. With this, the tag label production processing of one RFID label T ends.

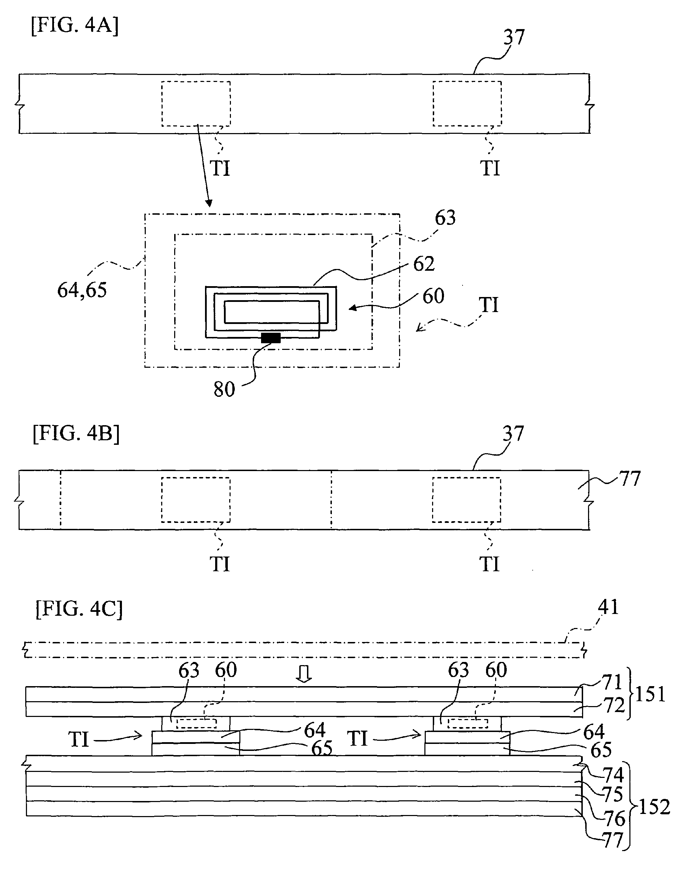

As shown in FIG. 4A, FIG. 4B, and FIG 4C, the tag tape 37 comprises a plurality of RFID tag insertion bodies TI disposed at a predetermined interval in the longitudinal direction thereof.

That is, in this example, the tag tape 37 has a seven-layer structure comprising an adhesive layer 71, a tape base layer 72, the RFID tag insertion body TI, an adhesive layer 74, a tape base layer 75, an adhesive layer 76, and a separation sheet 77, laminated in the order from the front surface side (upper side in FIG 4C) to the side corresponding to the opposite side (as viewed at the disposed location of the RFID tag insertion body TI). That is, a first tape 151 and a second tape 152 are provided opposite each other so that a plurality of RFID tag insertion bodies TI are disposed therebetween in the tape thickness direction.

The adhesive layer 71 is for bonding the cover film 41 to the tag tape 37 as described above.

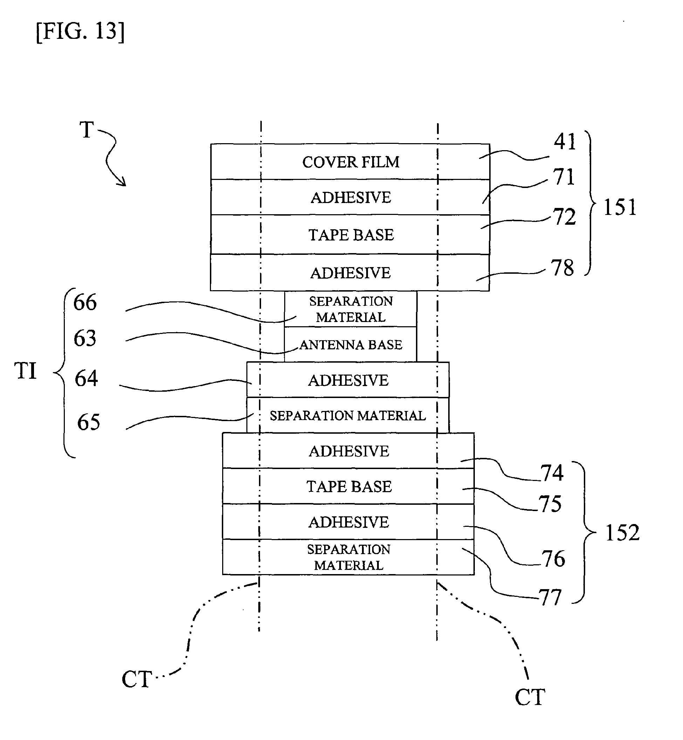

The tape base layer 72 and the tape base layer 75 are formed of a resin material such as PET (polyethylene terephthalate), for example, into a substantially tape shape. In this example, the RFID tag insertion body TI is disposed between the tape base layers 72 and 75 by the adhesive layer 74 provided on the tape base layer 75 side. The RFID tag insertion body TI is separably adhered to the adhesive layer 74 as described later. Note that a mounting adhesive layer may also be provided on the tape base layer 72 side as well (refer to FIG. 13, etc., described later).

The adhesive layer 76 is for affixing the RFID label T to a target product, etc. The separation sheet 77 protects the adhesive layer 76 until it is used for adhering.

The RFID tag insertion body TI is separably adhered to at least the first tape 151 or the second tape 152 (in this example, the second tape 152), between the first tape 151 and the second tape 152. That is, in this example, the RFID tag insertion body TI comprises an antenna base 63 comprising the RFID circuit element 60, and a separation material layer 65, from the front surface side (upper side in FIG 4C) to the side corresponding to the opposite side.

The antenna base 63, in this example, is formed of a suitable material such as PET (polyethylene terephthalate), into a sheet shape. The RFID tag circuit element 60 comprised an IC circuit part 80 and a tag antenna 62 (details described later). A side of the antenna base 63, that faces the tape base layer 72 of the first tape 151 contacts (without adhering to) the tape base layer 72.

An adhesive layer 64 is provided to one side of the separation material layer 65, for example, in an integrated manner. Then, the adhesive layer 64 reseparably adheres the antenna base 63 to the separation material layer 65. The separation material layer 65 separably adheres to the adhesive layer 74 provided to the second tape 152. As a result, before the adhesive layer 64 is reseparated from the antenna base 63, the antenna base 63, the adhesive layer 64, and the separation material layer 65 are integrated so as to form the RFID tag insertion body TI. Then, the RFID tag insertion body TI is separably adhered to the adhesive layer 74 of the second tape 152.

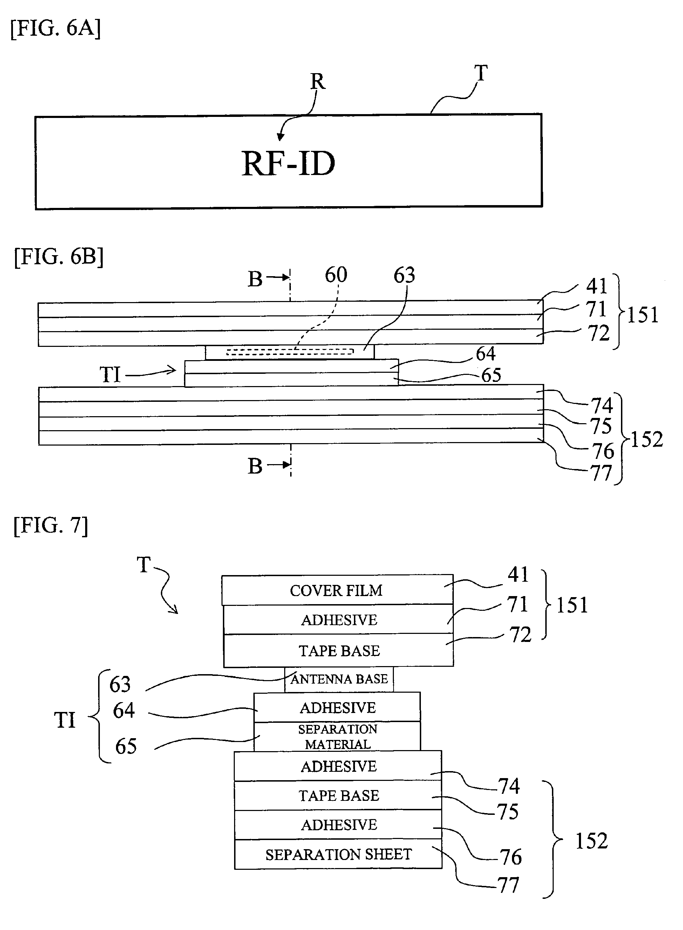

At this time, as shown in FIG 4A and FIG. 4C, the surface direction dimension of the separation material layer 65 and the adhesive layer 64 is larger than the surface direction dimension of the antenna base 63. Then, the separation material layer 65 is disposed so as to cover the entire surface of the separation material layer 65 side of the antenna base 63. Furthermore, as shown in FIG 4A, the maximum tape width direction dimension of the RFID tag insertion body TI (in this example, the dimension equivalent to the width direction dimension of the separation material layer 65 and the adhesive layer 64) is smaller than the maximum tape width direction of the first tape 151 and the second tape 152 (also refer to FIG. 7, etc., described later).

As shown in FIG. 5, the RFID circuit element 60, as already described, comprises the IC circuit part 80 and the tag antenna 62 connected thereto.

The IC circuit part 80 comprises a rectification part 81 configured to rectify the interrogation wave received via the tag antenna 62, a power source part 82 for storing the energy of the interrogation wave thus rectified by the rectification part 81 as a driving power source, a clock extraction part 84 configured to extract a clock signal from the interrogation wave thus received from the tag antenna 62 and supply the clock signal thus extracted to a control part 83, a memory part 86 for storing a predetermined information signal, a modem part 85 connected to the tag antenna 62, and the control part 83 for controlling the operation of the RFID circuit element 60 via the memory part 86, the clock extraction part 84, the modem part 85, etc.

The modem part 85 demodulates the communication signals from the apparatus 52 received by the tag antenna 62, and modulates the interrogation wave received by the tag antenna 62 based on the response signal from the control part 83 and resends that wave as a response wave from the tag antenna 62.

The control part 83 executes basic control, such as interpreting a received signal demodulated by the modem part 85, generating a response signal based on the information signal stored in the memory part 86, and returning the response signal from the modem part 85.

The clock extraction part 84 extracts the clock component from the received signal and sends the clock to the control part 83, supplying the clock corresponding to the frequency of the clock component of the received signal to the control part 83.

As shown in FIG 6A, FIG 6B, and FIG 7, the RFID label T, as previously described, is formed by cutting at a predetermined or desired length the tag label tape 48 with print (refer to FIG 3, etc.) wherein the cover film 41 is bonded to the tag tape 37 having the above-described 7-layer structure. As a result, the cover film 41 is added to such a seven-layer structure of the tag tape 37 as described above, thereby forming an eight-layer structure comprising the cover film 41, the adhesive layer 71, the tape base layer 72, the RFID tag insertion body TI, the adhesive layer 74, the tape base layer 75, the adhesive layer 76, and the separation sheet 77, in the same order as described above, and on the cover film 41 the print characters R are printed from the back surface side as previously described (not shown in FIG 6B).

As described above, in the present embodiment, the RFID tag insertion body TI which includes the substantially sheet-shaped antenna base 63 wherein the RFID circuit element 60 is disposed between the opposing first tape 151 and the second tape 152, thereby forming the tag tape 37. Then, the RFID tag insertion body TI disposed between the first tape 151 and the second tape 152 is separably adhered to the second tape 152 side via the adhesive layer 74.

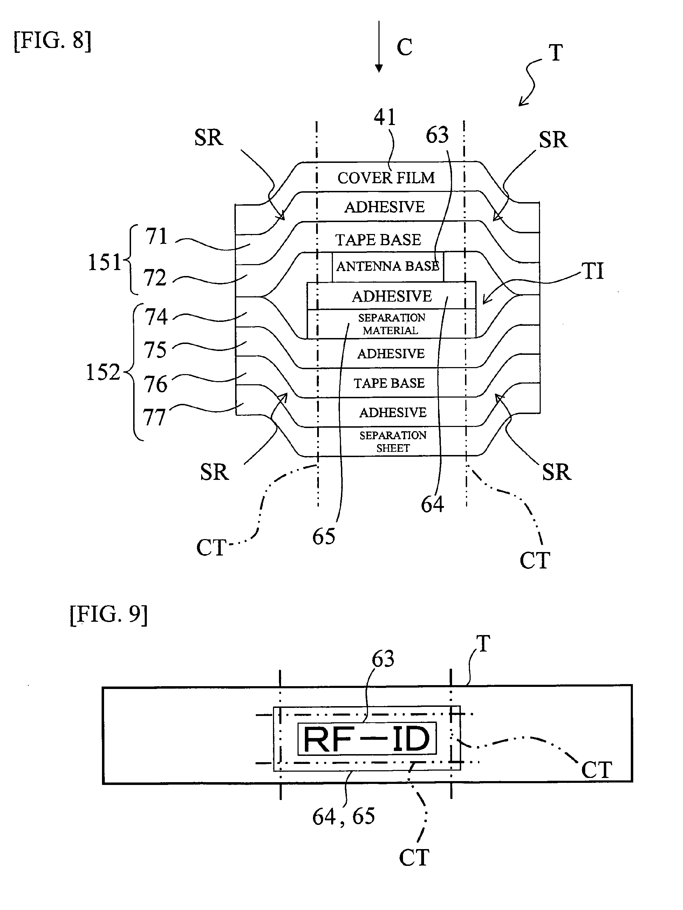

With the RFID tag insertion body TI adhered to the second tape 152 via the adhesive layer 74, the RFID tag insertion body TI can be positioned and fixed (reliably without shifting) to the second tape 152 by the adhesive strength thereof, in the process in which the RFID tag insertion body TI is inserted between the first tape 151 and the second tape 152 during tag tape 37 manufacturing. With the RFID tag insertion body TI reseparably adhered to the adhesive layer 74 via the separation material layer 65, the RFID tag insertion body TI can be separated from the second tape 152 to which it is adhered when usage has ended and the RFID label T is to be discarded. This processing will now be described with reference to FIG 8 to FIG 12.

As schematically shown in FIG 7, the RFID label T has an eight-layer structure comprising the cover film 41, the adhesive layer 71, the tape base layer 72, the RFID tag insertion body TI, the adhesive layer 74, the tape base layer 75, the adhesive layer 76, and the separation sheet 77. When FIG. 7 is illustrated in slightly more detail, actually, as shown in FIG. 8, the cover film 41 and the first tape 151 and the second tape 152 curve inward (curved sections SR) so as to contact each other at both side sections in the tape width direction of the RFID tag insertion body TI having a relatively narrow width. Then, the tape base layer 72 of the first tape 151 and the adhesive layer 74 of the second tape 152 are in close contact with each other.

As shown in FIG 9 and FIG. 8, when the RFID label T of the present embodiment of the above-described structure is to be discarded, the user first performs cutting along the cutting line CT of the outer peripheral side of the antenna base 63, and on the inner peripheral side from the outer edge of the adhesive layer 64 and the separation material layer 65, using a tool such as a scissors or cutter.

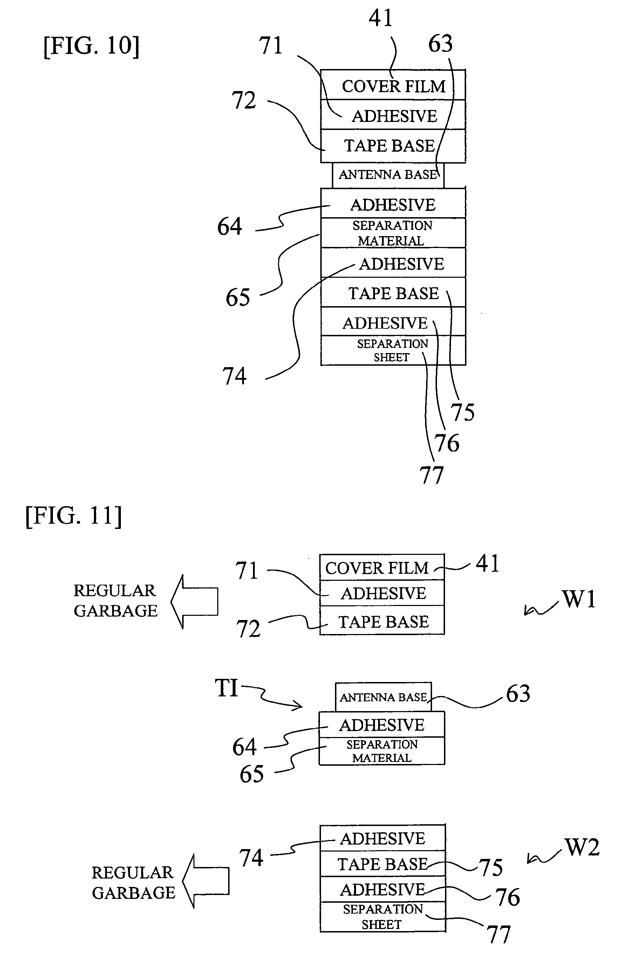

As shown in FIG 10, as a result of the above cutting, the curved sections SR of the cover film 41 and the first tape 151 and the second tape 152 described above are removed.

At this time, as described above, the separation material layer 65 of the RFID tag insertion body TI and the adhesive layer 74 of the second tape 152 are separable. Only the tape base layer 72 of the first tape 151 and the antenna base 63 of the RFID tag insertion body TI are in contact with each other. Thus, as a result of the above cutting and the removal of the curved sections SR, the tape base material 72 and the antenna base 63 are separated. Then, when the user separates the separation material layer 65 and the adhesive layer 74, as shown in FIG. 11, the tape is separated into three pieces: a tape piece W1 comprising the cover film 41, the adhesive layer 71, and the tape base layer 72 (originally the first tape 151), the RFID tag insertion body TI, and a tape piece W2 comprising the adhesive layer 74, the tape base layer 75, the adhesive layer 76, and the separation sheet 77 (originally the second tape 152).

As a result, the tape pieces W1 and W2, which do not include metal components such as the RFID tag insertion body TI, can be discarded as regular garbage. Furthermore, needless to say, the sections further on the outside than the cutting lines CT shown in FIG. 8, that is, a lump of tapes in which the two curved sections SR and SR are adhered by the tape base layer 72 and the adhesive layer 74, may be discarded as regular garbage as described above.

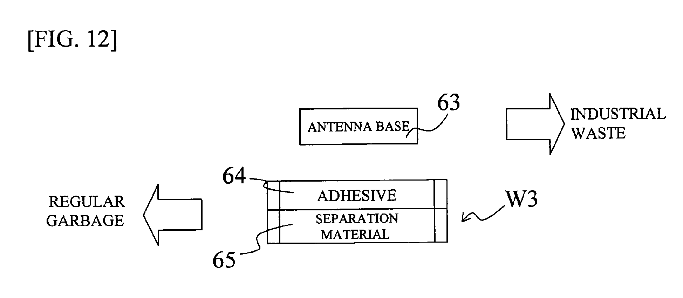

Then, in the RFID tag insertion body TI separated from the tape pieces W1 and W2 as described above, the adhesive layer 64 is reseparable from the antenna base 63 as described above (the adhesive layer 64 is a weak adhesive layer comprising a relatively low adhesive strength, for example). Thus, the user can pull the antenna base 63 apart from the adhesive layer 64, making it possible to separate the sheet piece W3 comprising the adhesive layer 64 and the separation material layer 65 (originally the RFID tag insertion body TI) from the antenna base 63 which includes metal. As a result, as shown in FIG 12, the sheet piece W3 that does not include metal components can be discarded as regular garbage, and just the remaining antenna base 63 can be discarded as industrial waste.

Furthermore, while in the above embodiment the adhesive layer 64 is a weak adhesive layer so that the antenna base 63 is reseparable, the present invention is not limited thereto and the antenna base 63 may be configured as not reseparable. In such a case, the antenna base 63 and the adhesive layer 64 are not separated, and remain integrated until the end. That is, the tape is separated only into the three pieces, i.e., the tape piece W1, the RFID tag insertion body TI, and the tape piece W2 shown in FIG 11, and the RFID tag insertion body TI is discarded as industrial waste in its entirety (along with the antenna base 63). Nevertheless, in this case as well, at least, compared to the conventional structure where the entire RFID label T is discarded as industrial waste, the section wastefully discarded as industrial waste is significantly decreased so as to make appropriate discard possible.

Furthermore, while in the above embodiment the structure is designed so that the antenna base 63 of the RFID tag insertion body TI simply contacts the tape base layer 72 of the first tape 151 and, after the cutting process based on the cutting line CT, the antenna base 63 and the tape base layer 72 are easily separable, the present invention is not limited thereto. That is, (given that the antenna base 63 is separable from the adhesive layer 74 of the second tape 152,) the antenna base 63 and the tape base layer 72 of the first tape 151 may be fixed so they are inseparable (via a strong adhesive layer, for example). In such a case, the tape piece W1 and the RFID tag insertion body TI shown in FIG. 11 are not separated, and remain integrated until the end. That is, the tape is separated only into two pieces, i.e., the single unit comprising the tape piece W1 and the RFID tag insertion body TI, and the tape piece W2 shown in FIG 11, and the single unit comprising the tape piece W1 and the RFID tag insertion body TI is discarded in its entirety as industrial waste (since the RFID tag insertion body TI includes the antenna base 63). Nevertheless, in this case as well, at least, compared to the conventional structure where the entire RFID label T is discarded as industrial waste, the section wastefully discarded as industrial waste is decreased so as to make appropriate discard possible.

Note that various modifications may be made according to the present embodiment without departing from the spirit and scope of the invention, in addition to the above. Description will be made below regarding such modifications.

(1) When an adhesive layer is provided on the RFID tag insertion body TI side of the first tape 151

As shown in FIG 13, a separation material layer 66 and an adhesive layer 78 are added to the structure shown in FIG. 7 in the present modification. That is, the adhesive layer 78 is newly provided on the RFID tag insertion body TI side of the tape base layer 72 of the first tape 151. Additionally, the separation material layer 66 is newly fixed to the first tape 151 side of the antenna base 63 of the RFID tag insertion body TI. Then, the adhesive layer 78 and the separation material layer 66 are configured to be mutually reseparable.

The present modification above also provides similar advantages to those in the foregoing embodiment. That is, after cutting based on the cutting line CT, the user separates the separation material layer 65 and the adhesive layer 74, and then further separates the separation material layer 66 and the adhesive layer 78. As a result, similar to the illustration shown in FIG. 11 described above, the tape is separated into three pieces: the tape piece comprising the cover film 41, the adhesive layer 71, the tape base layer 72, and the adhesive layer 78 (originally, the first tape 151), the RFID tag insertion body TI comprising the separation material layer 66, the antenna base 63, the adhesive layer 64, and the separation material layer 65, and the tape piece comprising the adhesive layer 74, the tape base layer 75, the adhesive layer 76, and the separation sheet 77 (originally, the second tape 152). The two tape pieces can then be processed as regular garbage as described above.

Subsequently, the user can further separate the RFID tag insertion body TI separated from the two tape pieces into a sheet piece comprising the adhesive layer 64 and the separation material layer 65, and a single unit comprising the antenna base 63 and the separation material layer 66 by pulling the antenna base 63 apart from the adhesive layer 64. As a result, the sheet piece that does not include metal components can be discarded as regular garbage, and just the remaining antenna base 63 and the separation material layer 66 can be discarded as industrial waste.

(2) When the RFID tag insertion body TI is adhered mainly to the first tape 151 side

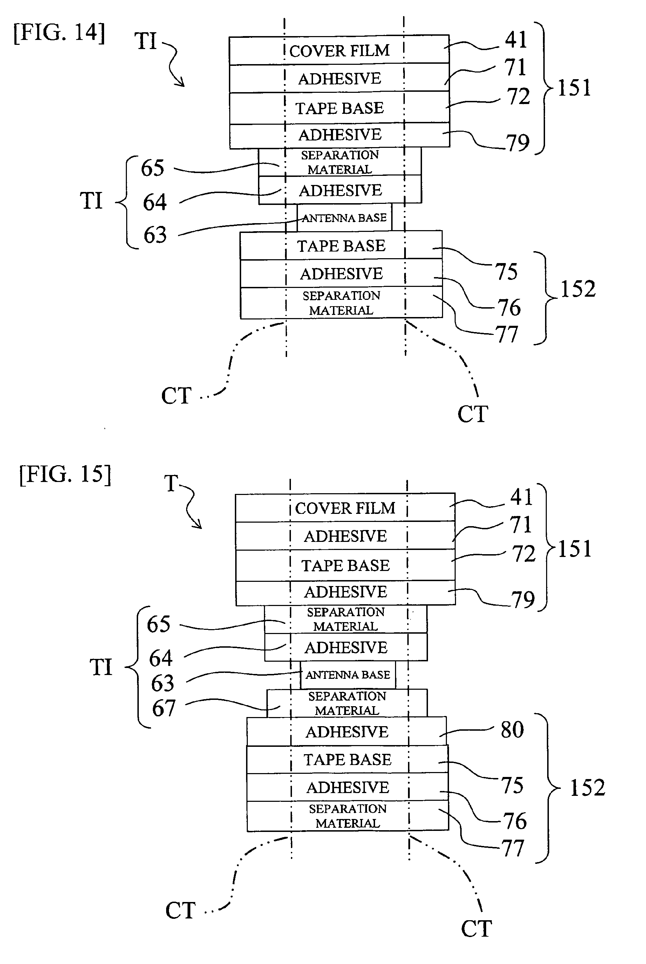

As shown in FIG 14, in the present modification, an adhesive layer 79 is added to the first tape 151 side, the adhesive layer 74 is removed from the second tape 152, and the disposed insertion direction of the RFID tag insertion body TI is inverted with respect to the structure shown in FIG. 7. That is, the adhesive layer 79 is newly provided on the RFID tag insertion body TI side of the tape base layer 72 of the first tape 151. Then, the separation material layer 65 of the RFID tag insertion body TI is separably adhered to the adhesive layer 79. As a result, the antenna base 63 of the RFID tag insertion body TI contacts the tape base layer 75 positioned on the RFID tag insertion body TI side of the second tape 152.

The present modification above also provides similar advantages to those in the foregoing embodiment. That is, after the cutting based on the cutting line CT, the antenna base 63 and the tape base layer 75 are separated. Further, the user separates the separation material layer 65 and the adhesive layer 79. As a result, similar to the illustration shown in FIG 11 described above, the tape is separated into three pieces: the tape piece comprising the cover film 41, the adhesive layer 71, the tape base layer 72, and the adhesive layer 79 (originally, the first tape 151), the RFID tag insertion body TI comprising the separation material layer 65, the adhesive layer 64, and the antenna base 63, and the tape piece comprising the tape base layer 75, the adhesive layer 76, and the separation sheet 77 (originally, the second tape 152). The two tape pieces can then be processed as regular garbage as described above.

Subsequently, the user can further separate the RFID tag insertion body TI separated from the two tape pieces into a sheet piece comprising the adhesive layer 64 and the separation material layer 65, and the antenna base 63 by pulling the antenna base 63 apart from the adhesive layer 64. As a result, the sheet piece that does not include metal components can be discarded as regular garbage, and just the remaining antenna base 63 can be discarded as industrial waste.

Furthermore, even with the structure having the disposed sequence shown in FIG 14, similar to the concept of the above modification (1), an adhesive layer may be provided on the RFID tag insertion body TI side of the second tape 152 as well.

As shown in FIG 15, in the present modification, a separation material layer 67 and the adhesive layer 80 are added to the structure shown in FIG 14. That is, the adhesive layer 80 is newly provided on the RFID tag insertion body TI side of the tape base layer 75 of the second tape 152. Additionally, the separation material layer 67 is newly fixed to the second tape 152 side of the antenna base 63 of the RFID tag insertion body TI. Then, the adhesive layer 80 and the separation material layer 67 are configured to be mutually reseparable.

The present modification also provides similar advantages to those in the foregoing embodiment. That is, after cutting based on the cutting line CT, the user separates the separation material layer 65 and the adhesive layer 79, and then further separates the separation material layer 67 and the adhesive layer 80. As a result, similar to the illustration shown in FIG. 11 described above, the tape is separated into three pieces: the tape piece comprising the cover film 41, the adhesive layer 71, the tape base layer 72, and the adhesive layer 79 (originally, the first tape 151), the RFID tag insertion body TI comprising the separation material layer 65, the adhesive layer 64, the antenna base 63, and the separation material layer 67, and the tape piece comprising the adhesive layer 80, the tape base layer 75, the adhesive layer 76, and the separation sheet 77 (originally, the second tape 152). The two tape pieces can then be processed as regular garbage as described above.

Subsequently, the user can further separate the RFID tag insertion body TI separated from the two tape pieces into a sheet piece comprising the adhesive layer 64 and the separation material layer 65, and a single unit comprising the antenna base 63 and the separation material layer 67 by pulling the antenna base 63 apart from the adhesive layer 64. As a result, the sheet piece that does not include metal components can be discarded as regular garbage, and just the remaining antenna base 63 and the separation material layer 67 can be discarded as industrial waste.

(3) When the adhesive layer 64 of the RFID tag insertion body TI is provided on the antenna base 63 side

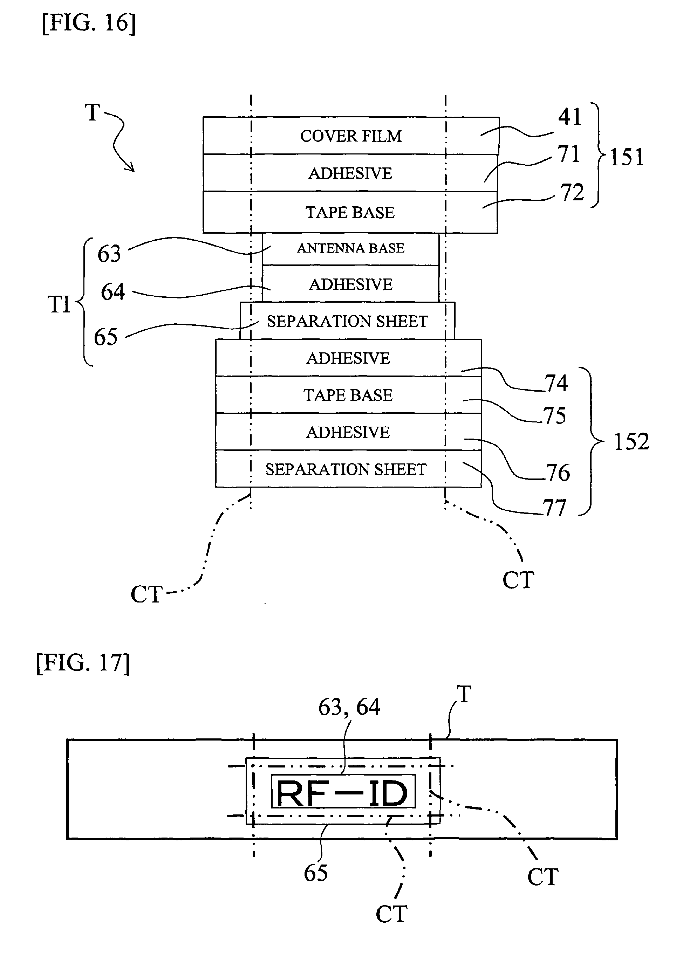

As shown in FIG 16, in the RFID tag insertion body TI of the structure shown in FIG. 7, the adhesive layer 64 comprises substantially the same surface direction dimension as the antenna base 63 in the present modification. Then, the adhesive layer 64 is integrally provided to the surface of one side of the antenna base 63, and the antenna base 63 is reseparably adhered to the separation material layer 65.

The present modification also provides similar advantages to those in the foregoing embodiment. That is, when the RFID label T is to be discarded, as shown in FIG. 17, the user first cuts the RFID label T on the cutting line CT on the outer peripheral side of the antenna base 63 and the adhesive layer 64, and on the inner peripheral side from the outer edge of the separation material layer 65, using a tool such as a scissors or cutter. After the cutting based on the cutting line CT, the antenna base 63 and the tape base layer 72 are separated. Further, the user separates the separation material layer 65 and the adhesive layer 74. As a result, similar to the illustration shown in FIG 11 described above, the tape is separated into three pieces: the tape piece comprising the cover film 41, the adhesive layer 71, and the tape base layer 72 (originally, the first tape 151), the RFID tag insertion body TI comprising the antenna base 63, the adhesive layer 64, and the separation material layer 65, and the tape piece comprising the adhesive layer 74, the tape base layer 75, the adhesive layer 76, and the separation sheet 77 (originally, the second tape 152). The two tape pieces can then be processed as regular garbage as described above.

Subsequently, the user can further separate the RFID tag insertion body TI separated from the two tape pieces into a sheet piece comprising the separation material layer 65, and the antenna base 65 with the adhesive layer 64 by pulling the separation material layer 65 apart from the adhesive layer 64. As a result, the sheet piece of the separation material layer 65 that does not include metal components can be discarded as regular garbage, and just the remaining antenna base 63 with the adhesive layer 64 can be discarded as industrial waste.

Furthermore, even with the structure having the disposed sequence shown in FIG 16, similar to the concept of the above modification (2), the RFID tag insertion body TI may be largely adhered to the first tape 151 side.

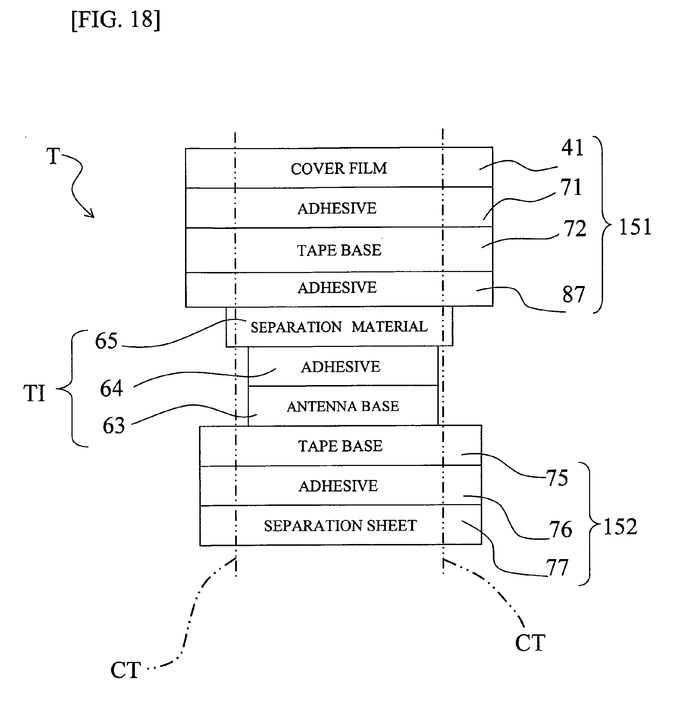

As shown in FIG. 18, in the present modification, an adhesive layer 87 is added to the first tape 151 side, the adhesive layer 74 is removed from the second tape 152, and the disposed insertion direction of the RFID tag insertion body TI is inverted with respect to the structure shown in FIG. 16. That is, the adhesive layer 87 is newly provided on the RFID tag insertion body TI side of the tape base layer 72 of the first tape 151. Then, the separation material layer 65 of the RFID tag insertion body TI is separably adhered to the adhesive layer 87. As a result, the antenna base 63 of the RFID tag insertion body TI contacts the tape base layer 75 positioned on the RFID tag insertion body TI side of the second tape 152.

The present modification also provides similar advantages to those described above. That is, after the cutting based on the cutting line CT, the antenna base 63 and the tape base layer 75 are separated. Further, the user separates the separation material layer 65 and the adhesive layer 87. As a result, similar to the illustration shown in FIG 11 described above, the tape is separated into three pieces: the tape piece comprising the cover film 41, the adhesive layer 71, the tape base layer 72, and the adhesive layer 87 (originally, the first tape 151), the RFID tag insertion body TI comprising the separation material layer 65, the adhesive layer 64, and the antenna base 63, and the tape piece comprising the tape base layer 75, the adhesive layer 76, and the separation sheet 77 (originally, the second tape 152). The two tape pieces can then be processed as regular garbage as described above.

Subsequently, the user can further separate the RFID tag insertion body TI separated from the two tape pieces into a sheet piece comprising the separation material layer 65, and the antenna base 65 with the adhesive layer 64 by pulling the separation material layer 65 apart from the adhesive layer 64. As a result, the separation material layer 65 that does not include metal components can be discarded as regular garbage, and just the remaining antenna base 63 with the adhesive layer 64 can be discarded as industrial waste.

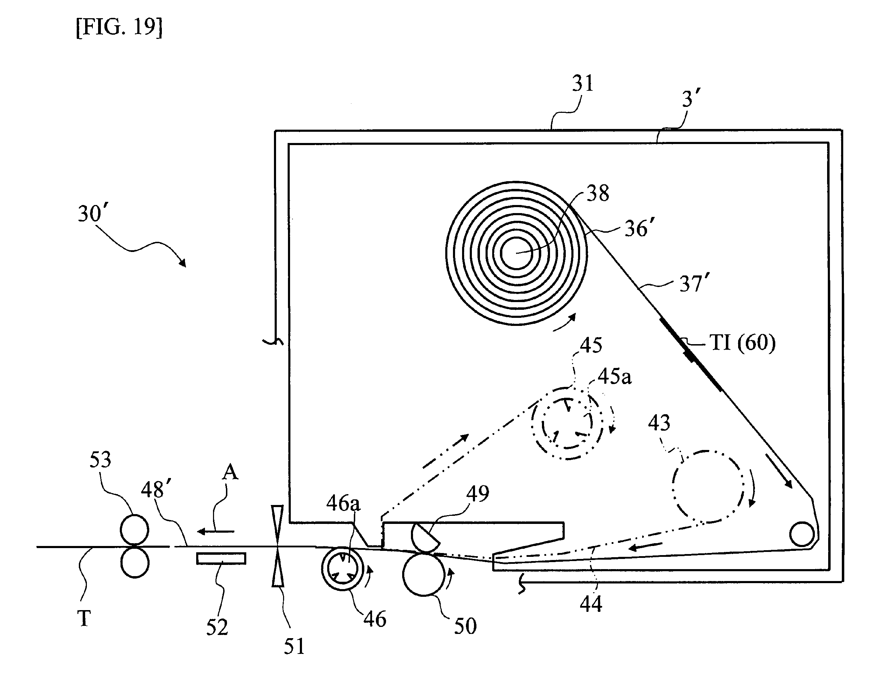

(4) Thermal tape, etc.
While the above employs a method in which printing is performed on the cover film 44 separate from the tag tape 37 comprising the RFID circuit element 60 and then the two are bonded to each other, the present invention is not limited thereto. That is, the present invention may also be applied to a method in which printing is performed on a print-receiving tape layer provided to the tag tape (a type in which bonding is not performed). Such a modification will now be described, with reference to FIG. 19 to FIG 24. Note that components identical to those in the above embodiment are denoted using the same reference numerals, and descriptions thereof will be omitted or simplified as appropriate.

As shown in FIG. 19, in the internal module 30', a cartridge 3' is loaded to the cartridge holder 31 of the present modification. The cartridge 3' comprises a tag tape roll 36' around which a tag tape 37 of the present modification comprising a first tape 151' and a second tape 152' is wound (actually spiral in shape, but simply shown in a concentric shape in the figure), with the cover film roll 39 provided to the cartridge 34 omitted. The ink ribbon roll 43, the ink ribbon 44, the ribbon take-up roller 45, and the ribbon take-up roller driving shaft 45a are also omitted (note that, in the case of the receptor type described later, these items remain and printing is performed using the ink ribbon in the same manner as the above embodiment; refer to the dashed-line section). Furthermore, since bonding is not performed, the pressure roller 47 is omitted, and the feeding roller 46 is provided on the side opposite a tag label tape 48' with print (with printing performed by the print head 49 on the tag tape 37') so as to feed and drive the tag label tape 48' with print.

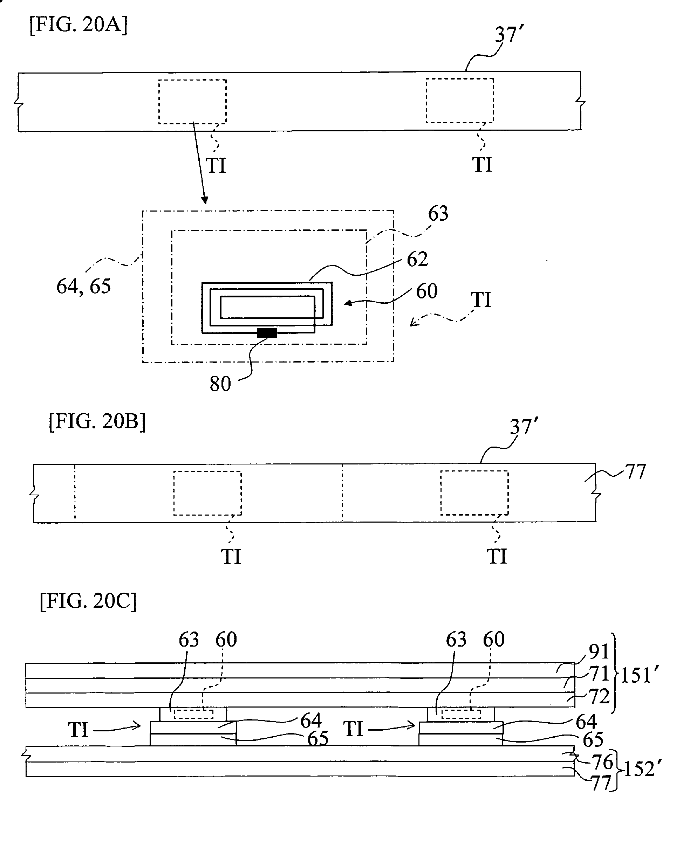

As shown in FIG 20A, FIG 20B, and FIG. 20C, the tag tape 37', similar to the tag tape 37, comprises a plurality of RFID tag insertion bodies TI disposed at a predetermined interval in the longitudinal direction.

The first tape 151' provided to the tag tape 37' is provided with a thermal paper 91 comprising a thermal layer on the side opposite the tape base layer 72 of the adhesive layer 71 for the above-described bonding. The thermal layer is formed of a thermal material capable of producing color and forming print by heat. Note that a thermal tape that provides the thermal layer to the front surface of a base material formed of PET (polyethylene terephthalate), etc., rather than paper is also acceptable. On the other hand, in the second tape 152', the adhesive layer 74 and the tape base layer 75 provided to the tag tape 37 are omitted (the tape base layer does not exist on the second tape). With this arrangement, the RFID tag insertion body TI is disposed between the tape base layer 72 of the first tape 151' and the adhesive layer 76 of the second tape 152'.

As a result, the tag tape 37' has a six-layer structure comprising the thermal paper 91, the adhesive layer 71, the tape base layer 72, the RFID tag insertion body TI, the adhesive layer 76, and the separation sheet 71, in that order from the front surface side (upper side in FIG 20C) to the side corresponding to the opposite side (as viewed at the disposed location of the RFID tag insertion body TI).

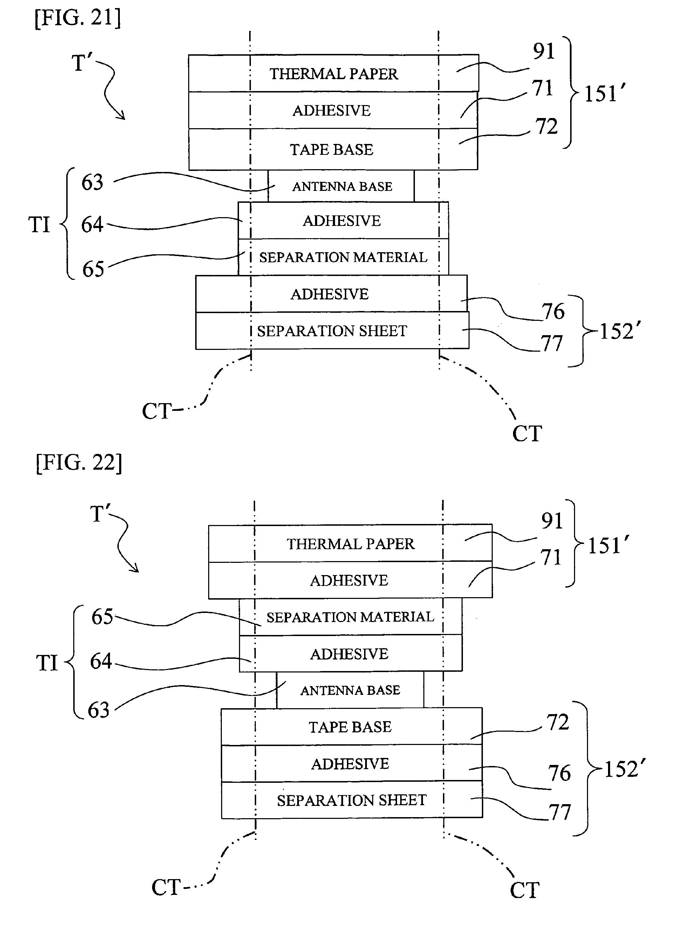

FIG 21 is a diagram schematically illustrating the cross-sectional structure of an RFID label T' produced using the tag tape 37' of the present modification,

As shown in FIG. 21, the thermal paper 91 is provided to the structure shown in FIG 7 in place of the cover film 41 in the present modification. Additionally, the adhesive layer 74 and the tape base layer 75 are omitted as described above.

The present modification also provides similar advantages to those in the foregoing embodiment. That is, after the cutting based on the cutting line CT, the base layer 72 and the antenna base 63 (which are the only layers in contact) are separated. Further, the user separates the separation material layer 65 and the adhesive layer 76. As a result, similar to the illustration shown in FIG 11 described above, the tape is separated into three pieces: the tape piece comprising the thermal paper 91, the adhesive layer 71, and the tape base layer 72 (originally, the first tape 151'), the RFID tag insertion body TI comprising the antenna base 63, the adhesive layer 64, and the separation material layer 65, and the tape piece comprising the adhesive layer 76 and the separation sheet 77 (originally, the second tape 152'). The two tape pieces can then be processed as regular garbage as described above.

Subsequently, the user can further separate the RFID tag insertion body TI separated from the two tape pieces into a sheet piece comprising the adhesive layer 64 and the separation material layer 65, and the antenna base 63 by pulling the antenna base 63 apart from the adhesive layer 64 (the adhesive layer 64 is provided to the separation material layer 65 side). As a result, the sheet piece that does not include metal components can be discarded as regular garbage, and just the remaining antenna base 63 can be discarded as industrial waste.

Furthermore, with a structure having the disposed sequence shown in FIG. 21, similar to the concept of the above modification (2), the RFID tag insertion body TI may be adhered to the first tape 151' side.

As shown in FIG. 22, the tape base layer 72 that was on the first tape 151' side is moved to the second tape 152' side, and the disposed insertion direction of the RFID tag insertion body TI is inverted in the present modification. That is, the separation material layer 65 of the RFID tag insertion body TI is separably adhered to the adhesive layer 71 of the first tape 151'. Then, the antenna base 63 of the RFID tag insertion body TI contacts the tape base layer 72 positioned on the RFID tag insertion body TI side of the second tape 152'.

The present modification also provides similar advantages to those described above. That is, after the cutting based on the cutting line CT, the antenna base 63 and the tape base layer 72 are separated. Further, the user separates the separation material layer 65 and the adhesive layer 71. As a result, as described above, the tape is separated into three pieces: the tape piece comprising the thermal paper 91 and the adhesive layer 71 (originally, the first tape 151'), the RFID tag insertion body TI comprising the separation material layer 65, the adhesive layer 64, and the antenna base layer 63, and the tape piece comprising the tape base layer 72, the adhesive layer 76, and the separation sheet 77 (originally, the second tape 152'). The two tape pieces can then be processed as regular garbage as described above.

Subsequently, the user can further separate the RFID tag insertion body TI separated from the two tape pieces into a sheet piece comprising the adhesive layer 64 and the separation material layer 65, and the antenna base 63 by pulling the antenna base 63 apart from the adhesive layer 64. As a result, the sheet piece that does not include metal components can be discarded as regular garbage, and just the remaining antenna base 63 can be discarded as industrial waste.

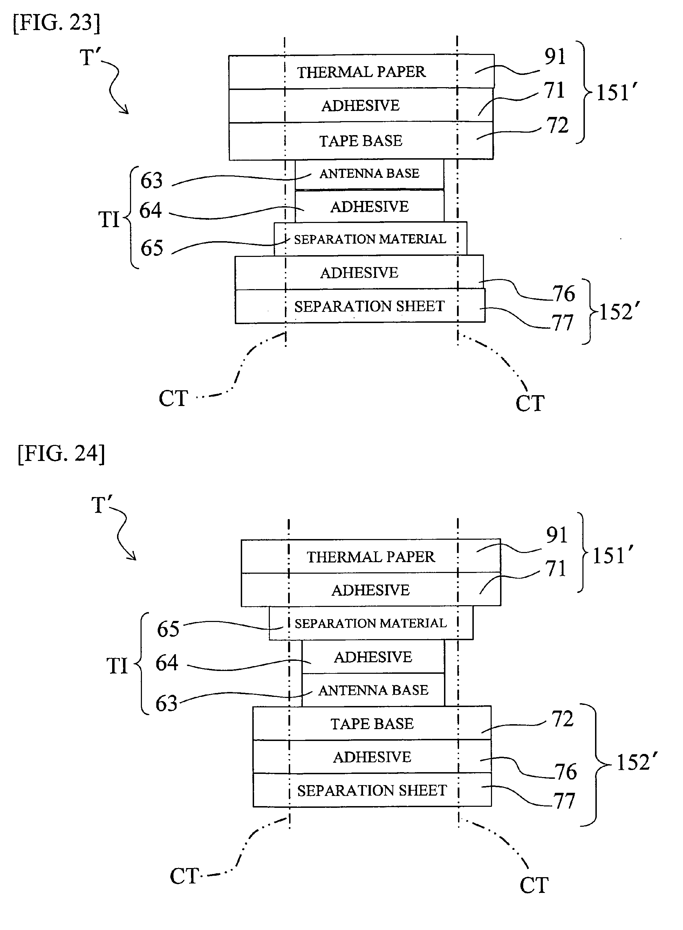

(5) When thermal tape is used and the adhesive layer 64 of the RFID tag insertion body TI is provided on the antenna base 63 side
FIG. 23 is a diagram schematically illustrating the cross-sectional structure of an RFID label T' produced using a tag tape of the present modification

As shown in FIG 23, in the RFID tag insertion body TI of the structure shown in FIG. 21, the adhesive layer 64 comprises substantially the same surface direction dimension as the antenna base 63 in the present modification. Then, the adhesive layer 64 is integrally provided to the surface of one side of the antenna base 63, and the antenna base 63 is reseparably adhered to the separation material layer 65.

The present modification also provides similar advantages to those described above. That is, when the RFID label T' is to be discarded, the user performs cutting along the cutting line CT on the outer peripheral side of the antenna base 63 and the adhesive layer 64, and on the inner peripheral side from the outer edge of the separation material layer 65. After the cutting based on the cutting line CT, the antenna base 63 and the tape base layer 72 are separated. Further, the user separates the separation material layer 65 and the adhesive layer 76. As a result, as described above, the tape is separated into three pieces: the tape piece comprising the thermal paper 91, the adhesive layer 71, and the tape base layer 72 (originally, the first tape 151'), the RFID tag insertion body TI comprising the antenna base 63, the adhesive layer 64, and the separation material layer 65, and the tape piece comprising the adhesive layer 76 and the separation sheet 77 (originally, the second tape 152'). The two tape pieces can then be processed as regular garbage as described above.

Subsequently, the user can further separate the RFID tag insertion body TI separated from the two tape pieces into a sheet piece comprising the separation material layer 65, and the antenna base 63 with the adhesive layer 64 by pulling the separation material layer 65 apart from the adhesive layer 64. As a result, the sheet piece of the separation material layer 65 that does not include metal components can be discarded as regular garbage, and just the remaining antenna base 63 with the adhesive layer 64 can be discarded as industrial waste.

Furthermore, with a structure having the disposed sequence shown in FIG. 23, similar to the concept of the above modification (2), the RFID tag insertion body TI may be largely adhered to the first tape 151' side.

As shown in FIG 24, with respect to the structure shown in FIG. 23, the tape base layer 72 is moved from the first tape 151' side to the second tape 152' side, and the disposed insertion direction of the RFID tag insertion body TI is inverted in the present modification. Then, the separation material layer 65 of the RFID tag insertion body TI is separably adhered to the adhesive layer 71 of the first tape. Then, the antenna base 63 of the RFID tag insertion body TI contacts the tape base layer 72 positioned on the RFID tag insertion body TI side of the second tape 152'.

The present modification also provides similar advantages to those described above. That is, after the cutting based on the cutting line CT, the antenna base 63 and the tape base layer 72 are separated. Further, the user separates the separation material layer 65 and the adhesive layer 71. As a result, as described above, the tape is separated into three pieces: the tape piece comprising the thermal paper 91 and the adhesive layer 71 (originally, the first tape 151'), the RFID tag insertion body TI comprising the separation material layer 65, the adhesive layer 64, and the antenna base layer 63, and the tape piece comprising the tape base layer 72, the adhesive layer 76, and the separation sheet 77 (originally, the second tape 152'). The two tape pieces can then be processed as regular garbage as described above.

Subsequently, the user can further separate the RFID tag insertion body TI separated from the two tape pieces into a sheet piece comprising the separation material layer 65, and the antenna base 63 with the adhesive layer 64 by pulling the separation material layer 65 apart from the adhesive layer 64. As a result, the separation material layer 65 that does not include metal components can be discarded as regular garbage, and just the remaining antenna base 63 with the adhesive layer 64 can be discarded as industrial waste.

Note that a tape comprising a transfer layer (receptor layer) in place of the thermal paper 91 comprising the thermal layer described above may also be used. The transfer layer is formed of a transfer-receiving material capable of print formation by thermal transfer from the ink ribbon (refer to the dashed-line in FIG 19). Further, a tape comprising an image-receiving layer in place of the thermal paper 91 may also be used. The image-receiving layer is formed of an image-receiving material capable of print formation by the application of ink. In these cases as well, advantages similar to the case where the thermal paper 91 is used are achieved.

Further, a thermal sheet comprising a thermal base layer (RFID tag insertion body TI side) and thermal layer (side opposite the RFID tag insertion body TI side) may be provided in place of the thermal paper 91 and adhered to tape base layer 72 and the RFID tag insertion body TI via the adhesive layer 71. Similarly, a transfer sheet (receptor sheet) comprising a transfer base layer and transfer layer or an image-receiving sheet (ink jet sheet) comprising an image-receiving base layer and an image-receiving layer may be provided. In this case as well, similar advantages are achieved.

Furthermore, using the cartridge 3', an RFID label T' with the cover film 41 of FIG. 7, FIG. 13, FIG 14, FIG 15, FIG. 16, FIG 18, etc., related to the above embodiment, modification (1), modification (2), and modification (3) replaced by the above-described thermal paper, etc., may also be produced. Or, conversely, using the above cartridge 3, an RFID label T with the layer of the thermal paper 91 of FIG 21, FIG 22, FIG 23, FIG. 24, etc., related to modification (4) and modification (5) replaced by the above-described cover film 41 may also be produced. In each of these cases as well, the similar advantages are achieved.

(6) Color related
While in the above, the color of each tape, etc., was not particularly described, all layers comprising the first tape 151 or 151' may be provided with substantially transparent color (transparent or semitransparent, such as a white color that is see-through), for example.

In such a case, the RFID tag insertion body TI can be seen from the first tape 151 or 151' side of the tag tape 37 or 37', through the first tape 151 or 151'. As a result, when separation or cutting along the cutting line CT is performed after usage when the RFID label T or T' is to be discarded, the position of the RFID tag insertion body TI can be well confirmed visually due to the above-described favorable visibility (refer to FIG. 9, FIG 17, etc.). This makes it possible to improve workability and reliability.

At this time, the separation material layer 65 of the RFID tag insertion body TI may comprise a color that can be seen through the first tape 151 or 151' (a relatively dark, non-transparent color, for example). With this arrangement, the separation material layer 65 is reliably viewable through the first tape 151 or 151' from the first tape 151 or 151' side.

Further, the antenna base 63 of the RFID tag insertion body TI may comprise a color on at least on the outline thereof that is viewable through the first tape 151 or 151' (a relatively dark, non-transparent color, for example). With this arrangement, the antenna base 63 is reliably visible through the first tape 151 or 151' from the first tape 151 or 151' side. This is particularly effective when cutting is performed on the outer peripheral side along the outline of the antenna base 63, and on the inner peripheral side along the outline of the separation material layer 65, as in the structure shown in FIG 7, FIG 13, FIG. 21, FIG 16, FIG 23, etc. (refer to FIG. 9, FIG 17, etc.). That is, cutting can be reliably performed along the cutting line CT without mistakenly cutting the antenna base 63.

(7) Other
While the above has been described in connection with an illustrative scenario in which the moving tag tape 37 or 37', the cover film 41, the tag label 48 or 48' with print, etc., are stopped so as to perform RFID tag information reading/writing or printing, the present invention is not limited thereto. That is, printing or reading/writing may be performed with the tag tape 37 or 37', etc., still in the feeding state (or after deceleration). Furthermore, reading/writing may be performed with the tag tape 37 or 37' held by predetermined feeding guides.

Further, while the above has been described in connection with an illustrative scenario in which the printed tag label tape 48 or 48' with print, which has accessed (performed reading/writing with) the RFID circuit element 60, is cut by the cutter 51 so as to form the RFID label T or T', the present invention is not limited thereto. That is, the present invention may also be applied to a case where a label mount (a so-called die cut label) separated in advance to a predetermined size corresponding to the label is continuously disposed on the tape fed out from the roll, and the label is not cut by the cutter 51 but rather the label mount (a label mount containing the accessed RFID circuit element 60 and on which corresponding printing has been performed) only is peeled from the tape after the tape has been discharged from the label discharging exit 7 so as to form the RFID label T or T'.

Furthermore, the present invention is also not limited to a case where the RFID tag information is read from or written to the IC circuit part 80 of the RFID circuit element 60, and print for identifying the RFID circuit element 60 is printed by the print head 49. This printing does not necessarily need to be performed, and the present invention may be applied to a case where RFID tag information is only read or written.

Furthermore, while the above has been described in connection with an illustrative scenario in which the tag tape 37 or 37' is wound around a reel member so as to form a roll 36 or 36', and the roll is disposed within the cartridge 3 or 3' so that the tag tape is fed out from the cartridge 3 or 3', the present invention is not limited thereto. For example, an arrangement can be made as follows. Namely, a long-length or rectangular tape or sheet (including tape cut to a suitable length after being supplied from a roll) in which at least one RFID circuit element 60 is disposed is stacked (laid flat and layered into a tray shape, for example) in a predetermined housing part so as to form a cartridge. The cartridge is then mounted to the cartridge holder provided to the tag label producing apparatus 1. Then, the tape or sheet is supplied or fed from the housing part, and printing or writing is performed so as to produce RFID labels.

Furthermore, a configuration wherein the above-described roll is directly removably loaded to the tag label producing apparatus 1 side, or a configuration wherein a long, flat paper-shaped or strip-shaped tape or sheet is moved one piece at a time from outside the tag label producing apparatus 1 by a predetermined feeder mechanism and supplied to within the tag label producing apparatus 1 are also possible. Additionally, the structure of the roll is not limited to a type that is removable from the tag label producing apparatus 1 main body, such as the cartridge 3 or 3', but rather the tag tape roll 36 or 36' may be provided as a so-called installation type or an integrated type that is not removable from the apparatus main body side. In this case as well, similar advantages are achieved.

Additionally, other than those previously described, approaches according to the respective embodiments and exemplary modifications may be utilized in combination as appropriate.

Note that various modifications which are not described in particular can be made according to the present invention without departing from the spirit and scope of the invention.

## Claims

1. A tag tape (37; 37') comprising:
an RFID tag insertion body (TI) that includes at least a substantially sheet-shaped antenna base (63) wherein an RFID circuit element (60) comprising an IC circuit part (80) for storing information and a tag antenna (62) for transmitting and receiving information is disposed; and
a first tape (151; 151') and a second tape (152; 152') provided opposite each other so that a plurality of said RFID tag insertion bodies (TI) are disposed therebetween in the tape thickness direction, **characterized in that**:
said RFID tag insertion body (TI) is separably adhered to at least said first tape (151; 151') or said second tape (152; 152'), between said first tape (151; 151') and said second tape (152; 152').

2. The tag tape (37; 37') according to claim 1, **characterized in that**:
one of said first tape (151; 151') and said second tape (152; 152') includes a tape base layer (72; 75) for disposing said RFID tag insertion body (TI); and
the other of said first tape (151; 151') and said second tape (152; 152') includes a tag insertion adhesive layer (74; 79; 87; 76; 71) for separably adhering said RFID tag insertion body (TI).

3. The tag tape (37) according to claim 1, **characterized in that**:
each of said first tape (151) and said second tape (152) respectively includes a tag insertion adhesive layer (74; 78; 79; 80) for separably adhering said RFID tag insertion body (TI).

4. The tag tape (37; 37') according to claim 2 or 3, **characterized in that**:
said RFID tag insertion body (TI) includes at least one separation material layer (65; 66; 67) that is connected to said antenna base (63) and separably adhered to said tag insertion adhesive layer (74; 76; 78; 79; 80; 87).

5. The tag tape (37; 37') according to claim 4, **characterized in that**:
said separation material layer (65; 66; 67) has a size enable to cover an entire surface of said separation material layer (65; 66; 67) side of said antenna base (63).

6. The tag tape (37; 37') according to claim 4 or 5, **characterized in that**:
said RFID tag insertion body (TI) has a reseparation adhesive layer (64) for reseparably adhering said antenna base (63) to said separation material layer (65; 66; 67).

7. The tag tape (37; 37') according to claim 6, **characterized in that**:
said reseparation adhesive layer (64) has a surface direction dimension that is substantially identical to a surface direction dimension of at least one of said separation material layer (65) and said antenna base (63).

8. The tag tape (37; 37') according to claim 6 or 7, **characterized in that**:
said RFID tag insertion body (TI) has a laminated structure in the order of said antenna base (63), said reseparation adhesive layer (64), and said separation material layer (65) so that said antenna base (63) is in contact with said tape base layer (72) provided to said first tape (151; 151'), and said separation material layer (65) is adhered to said tag insertion adhesive layer (74; 76) provided to said second tape (152; 152').

9. The tag tape (37; 37') according to claim 6 or 7, **characterized in that**:
said RFID tag insertion body (TI) has a laminated structure in the order of said separation material layer (65), said reseparation adhesive layer (64), and said antenna base (63) so that said separation material layer (65) is adhered to said tag insertion adhesive layer (79; 87; 71) provided to said first tape (151; 151'), and said antenna base (63) is in contact with said tape base layer (72; 75) provided to said second tape (152; 152').

10. The tag tape (37; 37') according to any one of claims 6 to 9, **characterized in that**:
a surface direction dimension of said antenna base (63) is configured to be smaller than a surface direction dimension of said separation material layer (65).

11. The tag tape (3 7) according to any one of claims 1 to 10, **characterized in that**:
said first tape (151) includes a first bonding adhesive layer (71) for bonding a print-receiving tape (41) comprising a printable printing surface on the bonding side.

12. The tag tape (37') according to any one of claims 1 to 10, **characterized in that**:
said first tape (151') includes a print-receiving layer formed of a print-receiving material capable of print formation.

13. The tag tape (37') according to claim 12, **characterized in that**:
said first tape (151') includes:
a print-receiving tape layer having said print-receiving layer on the opposite side of the bonding side, and
a second bonding adhesive layer (71) for bonding said print-receiving tape layer.

14. The tag tape (37; 37') according to any one of claims 1 to 13, **characterized in that**:
a maximum dimension of said RFID tag insertion body (TI) in the tape width direction is configured to be smaller than a maximum dimension of said first tape (151; 151') and a maximum dimension of said second tape (152; 152') in the tape width direction.

15. The tag tape (37; 37') according to any one of claims 1 to 14, **characterized in that**:
all layers of said first tape (151; 151'), including at least of said tape base layer (72) and said tag insertion adhesive layer (78; 79; 87; 71), have substantially transparent color.

16. The tag tape (37; 37') according to claim 15, **characterized in that**:
said separation material layer (65) has a color that is visible through said first tape (151; 151') with said substantially transparent color.

17. The tag tape (37; 37') according to claim 16, **characterized in that**:
said antenna base (63) has a color that makes the outline visible through said first tape (151; 151') with said substantially transparent color.

18. An RFID label (T) produced by use of the tag tape (37; 37') according to one of claims 1 to 17, **characterized in that**:
said RFID label (T) is formed by cutting said tag tape (37; 37') with a predetermined length.

19. A tag tape roll (36; 36') comprising the tag tape (37; 37') according to one of claims 1 to 17, **characterized in that**:
said tag tape (37; 37') is wound around an axis substantially orthogonal to the longitudinal direction of said tag tape (37; 37').

20. An RFID circuit element cartridge (3; 3') comprising a tag tape roll (36; 36') including the tag tape (37; 37') according to one of claims 1 to 17, **characterized in that**:
said RFID circuit element cartridge (3; 3') is detachably provided to a tag label producing apparatus (1).
